# EUROPEAN PATENT APPLICATION

(11) **EP 4 598 262 A1**
(43) Date of publication of application: **06.08.2025**
(21) Application number: 25154184.3
(22) Date of filing: 27.01.2025
(51) Int. Cl.: H04W 88/06, H04W 76/15, H04W 76/36, H04W 84/12

(54) **BAND STEERING OF WIRELESS LOCAL AREA NETWORK TRAFFIC IN COEXISTENCE SCENARIOS USING MULTI-LINK OPERATION**

(30) Priority: 31.01.2024 IN 202421006372; 23.07.2024 US 202418781530
(71) Applicant: Avago Technologies International Sales Pte. Limited, Singapore 768923 (SG)
(72) Inventor: Agarwal, Peyush, Irvine, 92618 (US); Garg, Namit, Irvine, 92618 (US); Joseph, Bobby, Irvine, 92618 (US); Asokan, Pradhap, Irvine, 92618 (US)
(74) Representative: Dilg, Haeusler, Schindelmann Patentanwaltsgesellschaft mbH

(57) **Abstract**

A technical solution for band steering of WLAN traffic using multi-link operation is provided. The solution can include a multi-link device, MLD, (302) to establish a multi-link, ML, comprising links across different frequency bands. The MLD (302) can grant a device to share access to a link of the ML with a WLAN device (304). The device can communicate using a different type of wireless protocol than a protocol of the WLAN device (304) sharing a frequency band with the device. The MLD (302) can block a WLAN communication of the WLAN device (304) on the link of the ML to be used by device for communicating and direct WLAN transmissions to a non-shared link of the ML while the device performs activity (e.g., other than WLAN communication) on the link. The MLD (302) can allow the WLAN device (304) to resume WLAN transmission on the link responsive to the device completing activity on the link.

## Description

### CROSS-REFERENCE TO RELATED PATENT APPLICATIONS

This application claims the benefit of and priority to an Indian Provisional Patent Application No. 202421006372, filed January 31, 2024, which is incorporated herein by reference in its entirety and for all purposes.

### TECHNICAL FIELD

This disclosure generally relates to systems and methods of communication in wireless local area networks, including implementation of link adaptation, traffic latency and coexistence between different wireless technologies.

### BACKGROUND

The market for wireless communications devices has grown due to increased use of portable devices, increased connectivity and data transfer between all manners of devices. Digital switching techniques have facilitated the large-scale deployment of affordable, easy-to-use wireless communication networks. Wireless communication can operate in accordance with various standards, such as the IEEE 802.11x (e.g., Wi-Fi technology), Bluetooth, global system for mobile communications (GSM), code division multiple access (CDMA). Using such technologies, wireless communication devices can connect to local area networks and the internet without physical cables, communicating over radio frequencies and across various spaces and ranges.

### SUMMARY

The technical solutions of this disclosure provide frequency band management of wireless local area network (WLAN) traffic to improve in-device coexistence via multi-link operation. When a user device (UE) utilizes multiple links to wirelessly communicate with different devices using various wireless technologies, the UE can share some of the resources (e.g., antennas, transceivers, or signal processing circuitry) across these technologies. Managing in-device coexistence becomes challenging when these technologies communicate over overlapping frequency bands, leading to in-device coexistence (IDC) issues that can degrade throughput and quality. The technical solutions in this disclosure overcome these challenges by managing WLAN traffic across shared and non-shared links, effectively mitigating IDC issues and maintaining optimal communication performance when non-WLAN traffic uses links shared with WLAN communications.

An aspect of the technical solutions is directed to a system. The system can include a multi-link device (MLD) comprising one or more processors coupled with memory. The one or more processors can establish a multi-link (ML) comprising a plurality of links across different frequency bands. The one or more processors can grant a device to share access to a link of the ML with at least one Wireless Local Area Network (WLAN) device. The device can communicate using a different type of wireless protocol than a protocol of the WLAN device that shares a frequency band with the device. The one or more processors can block a WLAN communication of the WLAN device on the link of the ML to be used by device for communicating. The one or more processors can direct WLAN transmissions of the WLAN device to a non-shared link of the ML at least while the device performs activity on the link. The one or more processors can allow the WLAN device to resume WLAN transmission on the link responsive to the device completing activity on the link.

The activity on the link can utilize the different type of wireless protocol corresponding to at least one of: Bluetooth (BT) communications, cellular network communications, ZigBee communications, Z-Wave communications, Thread communications or digital enhanced cordless telecommunications (DECT) communications. The one or more processors can turn off a power amplifier for processing the WLAN communication on the link of the ML in response to the blocking.

The one or more processors can determine that an unused link of the ML is capable of communicating the WLAN communication. The one or more processors can grant the device to share access to the link, in response to the determination. The one or more processors can determine the link is used for the activity of the device. The one or more processors can block the WLAN communication of the WLAN device in response to the determination.

The one or more processors can identify a time duration during which the device is to perform the activity on the link. The one or more processors can determine to direct the WLAN transmissions to the non-shared link for at least the time duration. The one or more processors can identify one or more medium access control protocol data units (MPDUs) of a physical protocol data unit (PPDU) of the WLAN communication not yet communicated with the WLAN device via the link prior to the blocking. The one or more processors can direct the identified one or more MPDUs to the non-shared link for communication with the WLAN device via the non-shared link.

The one or more processors can determine a time duration until a start of the activity on the link by the device. The one or more processors can adjust a size of the WLAN communication to complete communicating the WLAN communication on the link prior to the start of the activity on the link by the device. The one or more processors can generate an indication for an antenna shared for the WLAN communications with the WLAN device and the activity by the device. The indication can be indicative to the WLAN device receiving the indication as to whether the MLD is receiving WLAN communications via the link.

An aspect of the technical solutions is directed to a multi-link device (MLD). The MLD can include one or more processors coupled with memory. The one or more processors can allocate, from a multi-link (ML) comprising a plurality of links across different frequency bands, a non-shared link of the ML for a Wireless Local Area Network (WLAN) device and a shared link of the ML. The shared link of the ML can be for the WLAN device and a device communicating using a different type of wireless protocol than a protocol of the WLAN device sharing a frequency band with the device. The one or more processors can block WLAN communications transmitted to the WLAN device on the shared link at least while there is at least one active connection with the device. The one or more processors can block, via an indication sent to the WLAN device, WLAN communications from the WLAN device at least while there is at least one active connection with the device.

The one or more processors can detect an active connection with the device to communicate using the different type of wireless protocol. The one or more processors can allocate the shared link to the device and the non-shared link to the WLAN device, responsive to the detection. The different type of wireless protocol includes at least one of: Bluetooth communications, cellular network communications, ZigBee communications, Z-Wave communications, Thread communications or digital enhanced cordless telecommunications (DECT) communications. The shared link can correspond to the frequency band of 2.4 GHz, 5 GHz or 6 GHz. The non-shared link can correspond to at least one of a frequency band of 5 GHz or a frequency band of 6 GHz.

An aspect of the technical solutions is directed to a method. The method can include establishing, by a multi-link device (MLD) or one or more processors of the MLD, a multi-link (ML) comprising a plurality of links across different frequency bands. The method can include the MLD granting a device to share access to a link of the ML with at least one Wireless Local Area Network (WLAN) device. The device can communicate using a different type of wireless protocol than a protocol of the WLAN device that shares a frequency band with the device. The method can include the MLD blocking a WLAN communication of the WLAN device on the link of the ML to be used by device for communicating. The method can include the MLD directing WLAN transmissions of the WLAN device to a non-shared link of the ML at least while the device performs activity on the link. The method can include the MLD allowing the WLAN device to resume WLAN transmission on the link responsive to the device completing activity on the link.

The activity on the link can utilize the different type of wireless protocol corresponding to at least one of: Bluetooth (BT) communications, cellular network communications, ZigBee communications, Z-Wave communications, Thread communications or digital enhanced cordless telecommunications (DECT) communications. The method can include turning off, by the MLD, a power amplifier for processing the WLAN communication on the link of the ML in response to the blocking. The method can include determining, by the MLD, that an unused link of the ML is capable of communicating the WLAN communication. The method can include the MLD granting the device to share access to the link, in response to the determining.

The method can include the MLD determining the link is used for the activity of the device. The method can include the MLD blocking the WLAN communication of the WLAN device in response to the determining. The method can include the MLD identifying a time duration during which the device is to perform the activity on the link. The method can include the MLD determining to direct the WLAN transmissions to the non-shared link for at least the time duration.

The method can include the MLD identifying one or more medium access control protocol data units (MPDUs) of a physical protocol data unit (PPDU) of the WLAN communication not yet communicated with the WLAN device via the link prior to the blocking. The method can include the MLD directing the identified one or more MPDUs to the non-shared link for communication with the WLAN device via the non-shared link.

### BRIEF DESCRIPTION OF THE DRAWINGS

These and other aspects and features of the present embodiments will become apparent to those ordinarily skilled in the art upon review of the following description of specific embodiments in conjunction with the accompanying figures.
FIG. 1 is an example block diagram of a system for communicating wireless traffic across sender and receiver devices in an aspect of in-device coexistence environment.
FIG. 2 is a block diagram illustrating an architecture for a computer system that can be employed to implement elements of the systems and methods described and illustrated herein.
FIG. 3 is an example block diagram of a system for providing band steering of WLAN traffic in coexistence scenarios using multi-link operation.
FIG. 4 is an example method for providing band steering of WLAN traffic in coexistence scenarios using multi-link operation.
FIG. 5 is an example of a configuration in which MLD and WLAN device exchange communications via shared and non-shared links.
FIG. 6 is an example of a dynamic mechanism in which WLAN traffic is directed towards non-shared links in response to detected non-WLAN activity.
FIG. 7 is an example of a static mechanism in which WLAN communications are disabled on a shared link while the shared link is utilized by non-WLAN activity.
FIG. 8 is an example of a static mechanism in which WLAN communications are timed and sized to be completed in between any non-WLAN transmissions on a shared link.

### DETAILED DESCRIPTION

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a^{™}, IEEE 802.11b^{™}, IEEE 802.11g^{™}, IEEE P802.11n^{™}; IEEEP802.11ac^{™}; and IEEE P802.11be^{™} draft version D3.0 through D6.0 standards. Although this disclosure can reference aspects of these standard(s), the disclosure is in no way limited by these standard(s).

The present embodiments shall now be described in detail with reference to the drawings, which are provided as illustrative examples of the embodiments so as to enable those skilled in the art to practice the embodiments and alternatives apparent to those skilled in the art. Figures and examples below are not meant to limit the scope of the present embodiments to a single embodiment, but other embodiments are possible by way of interchange of some or all of the described or illustrated elements, or those apparent to a person of ordinary skill in the art. Certain elements of the present embodiments can be partially or fully implemented using known components, only those portions of such known components that are necessary for an understanding of the present embodiments shall be described, and detailed descriptions of other portions of such known components will be omitted so as not to obscure the present embodiments. Embodiments described in their illustrated contexts should not be limited thereto. For example, embodiments described as being implemented in software should not be limited to such implementation alone, but they can include embodiments implemented in hardware, or combinations of software and hardware, and vice-versa, as will be apparent to those skilled in the art, unless otherwise specified herein. In the present specification, an embodiment showing a singular component should not be considered limiting. Rather, the present disclosure is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present embodiments encompass present and future known equivalents to the known components referred to herein by way of illustration.

In coexistence designs of multi-link devices (MLDs), WLAN communications can share resources (e.g., antennas, radio transceivers, frequency band and processing circuitry such as power amplifiers) with other (e.g., non-WLAN) wireless communication technologies. These non-WLAN wireless technologies can include, for example, Bluetooth technology (e.g., BT), cellular network communications technology (e.g., long term evolution or LTE), Zigbee wireless communications technology (ZigBee), Z-Wave communications technology (Z-Wave), Thread communications technology (Thread) or digital enhanced cordless communications (DECT) technology. Within such MLDs, WLAN communications and non-WLAN communications can share both the frequency bands of communication and the resources to implement such communications, which can lead to potential performance issues for either or both WLAN and non-WLAN communications.

The technical solutions can overcome such IDC challenges by managing the WLAN communications to defer reception and transmission of the shared links (e.g., shared frequency bands) to other (e.g., non-WLAN) wireless technologies, such as the BT, when the antenna is granted to such non-WLAN communications. Similarly, BT (or any other non-WLAN communication) can defer its transmission when it does not get an antenna grant. Technical issues however can arise during operation due to the shared resources (e.g., shared band, shared antenna or radio) and the related leakage from WLAN transmit (TX) to BT Receive (RX) signals and vice-versa.

Different coexistence schemes and state machines can be implemented to mitigate the impact on WLAN and non-WLAN communications in terms of their latency and throughput performance. Such schemes can include monitoring the communication activities of the WLAN and other technologies (e.g., BT) allowing the MLD to arbitrate priorities and grants between these technologies accordingly. Some of the schemes or solutions can include any aspect of the Adaptive Frequency Hopping (AFH) Map in which the non-WLAN technology (e.g., BT) can choose an AFH map which avoids overlapping with the WLAN channel. The schemes or solutions can include blocking WLAN receptions (RX), in which WLAN can avoid receptions when non-WLAN technology (e.g., BT) has priority by transmitting protection frames before the start of the non-WLAN (e.g., BT) activity. The protection frames can include Clear to Send announcement (CTS2A) or power management (PM) indications to an Access Point (AP). The CTS2A can reserve the channel and stops other WLAN devices from transmitting on the same channel. The PM indication can block the AP from transmitting any downlink (DL) data frames to the user equipment (e.g., UE) device (also referred to as a station or a STA) sending PM indication. In both cases, the station (STA) can be blocked from receiving DL data, thereby increasing the DL packet latency.

Some of the schemes or solutions can include blocking WLAN transmissions (TXs), such that the WLAN defers its transmissions when BT is granted priority. Then WLAN transmissions can get pre-empted by turning off PAs (power amplifier) as soon as the BT gets the grant. A power amplifier (PA) of an MLD can be an electronic component, device or a circuit that boosts the strength of a radio frequency signal for communication (e.g., transmission or receiving) to make the signals sufficiently strong for maintaining a reliable communication. When one or more PAs are turned off, the MLD may save energy. In such cases, only some media access control (MAC) protocol data units (MPDUs) can get successfully transmitted from the MLD (e.g., prior to start of the non-WLAN activity), while the preempted MPDUs can be attempted after the non-WLAN (e.g., BT) completes its activity and WLAN acquires its next transmit opportunity or operation (TXOP).

Some of the schemes or solutions can include resizing the WLAN transmission, such that the WLAN can reduce the duration of its transmission by aggregating a smaller number of MPDUs within a transmission, thereby causing the transmission to finish before the start of the predicted non-WLAN (e.g., BT) activity. In some instances, the schemes that utilize blocking WLAN RX and resizing WLAN transmissions can impact both uplink (UL) and DL latency on WLAN. Similarly, non-WLAN (e.g., BT) transmissions may also be impacted when the non-WLAN (e.g., BT) does not get the antenna granted.

The technical solutions of the present disclosure overcome these and other challenges by band steering WLAN traffic utilizing multi-link operation. While the technical solutions can be discussed using BT as an example of the non-WLAN communications for which the coexistence scenarios are discussed, it is understood that the technical solutions are applicable to other radio technologies that share frequencies or bands with WLAN (e.g., LTE, ZigBee, Z-Wave, Thread and DECT).

The IEEE 80211BE standard supports Multi-Link (ML) operation allowing a non-AP ML STA to associate to an ML AP on more than one channel or band called links. The standard supports STR (Simultaneous Transmit and Receive Operation), NSTR (Non-simultaneous Transmit and Receive Operation), and eMLSR (enhanced Multi-link Single Radio) modes as three variants of ML operation. In order to improve latency and throughput performance of WLAN and BT, the technical solutions of this disclosure (e.g., the systems and methods discussed herein) can utilize ML and use a dynamic or a static mechanism. The dynamic mechanism can steer WLAN transmissions and reception between WL links of MLD when non-WLAN (e.g., BT) is actively transmitting or receiving on one of the shared bands of ML. The static mechanism can steer WLAN traffic when any non-WLAN (e.g., BT) activity is detected. Depending on the implementations, the technical solutions can include any combination of any features or operations of the static and dynamic mechanisms.

### A. COMPUTING AND NETWORK ENVIRONMENT

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

Various embodiments disclosed herein are related to one or more apparatuses, devices and/or systems, including a transmitter and/or receiver and one or more processors and that may be configured, constructed or implemented to communicate using any encoding process and techniques as defined or supported by any IEEE 801.11 standard such as 902.11n, 802.11AC, 802.1 1 ax and 802.11be or other versions and embodiments of the IEEE 802.11 standard.

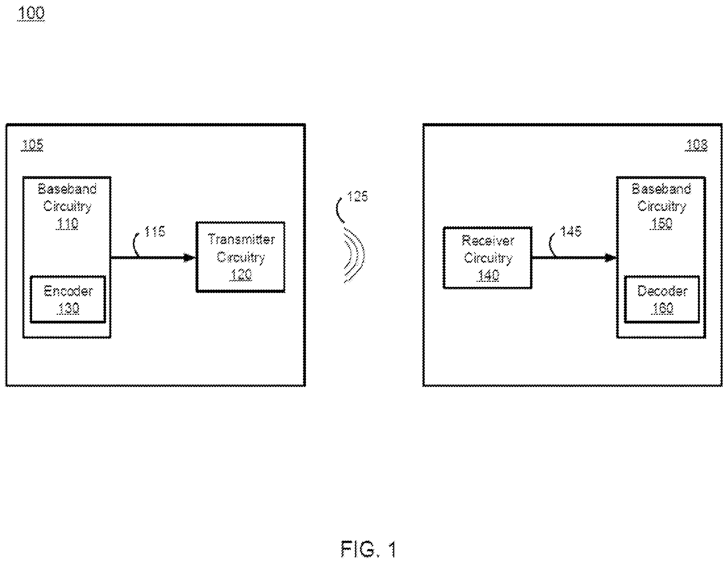

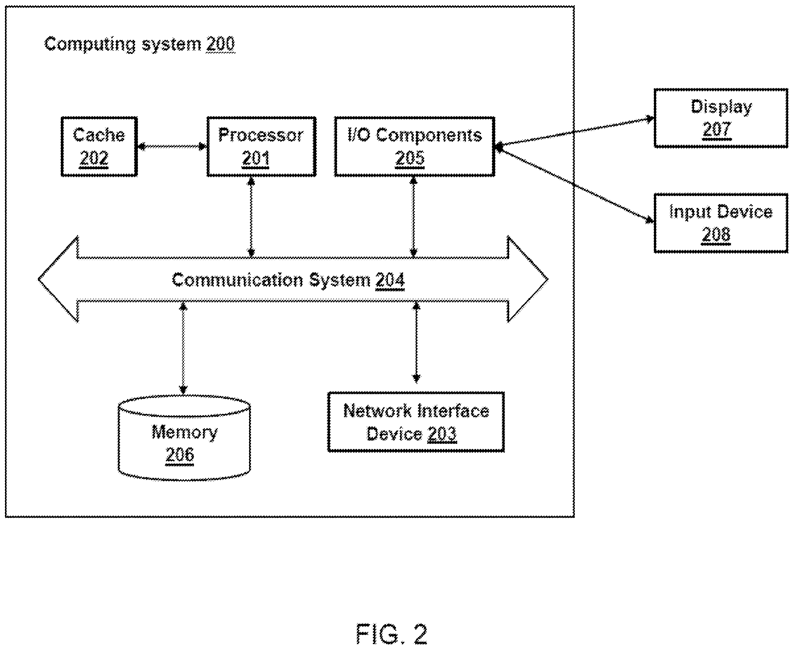

Referring to FIG. 1, illustrated is a diagram depicting an example communication environment 100 including communication systems (or communication apparatuses) 105, 108, according to one or more embodiments. In one embodiment, the communication system 105 includes a baseband circuitry 110 and a transmitter circuitry 120, and the communication system 108 includes a baseband circuitry 150 and a receiver circuitry 140. In one aspect, the communication system 105 is considered a transmitter communication system, and the communication system 108 is considered a receiver communication system. These components operate together to exchange data (e.g., messages or frames) through a wireless medium. These components are embodied as application specific integrated circuit (ASIC), field programmable gate array (FPGA), or any combination of these, in one or more embodiments. In some embodiments, the communication systems 105, 108 include more, fewer, or different components than shown in FIG. 1. For example, each of the communication systems 105, 108 includes transceiver circuitry to allow bi-directional communication between the communication systems 105, 108 or with other communication systems. In some embodiments, each of the communication systems 105, 108 may have configuration similar to that of a computing system 200 as shown in FIG. 2.

The baseband circuitry 110 of the communication system 105 is a circuitry that generates the baseband data 115 for transmission. The baseband data 115 includes information data (e.g., signal(s)) at a baseband frequency for transmission. In one approach, the baseband circuitry 110 includes an encoder 130 that encodes the data and generates or outputs parity bits. In one aspect, the baseband circuitry 110 (or encoder 130) obtains a generator matrix or a parity check matrix or uses a previously produced generator matrix or a previously produced parity check matrix and encodes the information data by applying the information data to the generator matrix or the parity check matrix to obtain a codeword. In some embodiments, the baseband circuitry 110 stores one or more generator matrices or one or more parity check matrices that conform to any IEEE 802.11 standard for WLAN communication. The baseband circuitry 110 retrieves the stored generator matrix or the stored parity check matrix in response to detecting information data to be transmitted, or in response to receiving an instruction to encode the information data. In one approach, the baseband circuitry 110 generates the parity bits according to a portion of the generator matrix or using the parity check matrix and appends the parity bits to the information bits to form a codeword. The baseband circuitry 110 generates the baseband data 115 including the codeword for the communication system 108 and provides the baseband data 115 to the transmitter circuitry 120.

The transmitter circuitry 120 of the communication system 105 includes or corresponds to a circuitry that receives the baseband data 115 from the baseband circuitry 110 and transmits a wireless signal 125 according to the baseband data 115. In one configuration, the transmitter circuitry 120 is coupled between the baseband circuitry 110 and an antenna (not shown). In this configuration, the transmitter circuitry 120 up-converts the baseband data 115 from the baseband circuitry 110 onto a carrier signal to generate the wireless signal 125 at an RF frequency (e.g., 10 MHz to 60 GHz), and transmits the wireless signal 125 through the antenna.

The receiver circuitry 140 of the communication system 108 is a circuitry that receives the wireless signal 125 from the communication system 105 and obtains baseband data 145 from the received wireless signal 125. In one configuration, the receiver circuitry 140 is coupled between the baseband circuitry 150 and an antenna (not shown). In this configuration, the receiver circuitry 140 receives the wireless signal 125 though an antenna, and down-converts the wireless signal 125 at an RF frequency according to a carrier signal to obtain the baseband data 145 from the wireless signal 125. The receiver circuitry 140 then provides the baseband data 145 to the baseband circuitry 150.

The baseband circuitry 150 of the communication system 108 includes or corresponds to a circuitry that receives the baseband data 145 from the receiver circuitry 140 and obtains information data from the received baseband data 145. In one embodiment, the baseband circuitry 150 includes a decoder 160 that extracts information and parity bits from the baseband data 145. The decoder 160 decodes the baseband data 145 to obtain the information data generated by the baseband circuitry 110 of the communication system 105.

In some embodiments, each of the baseband circuitry 110 (including the encoder 130), the transmitter circuitry 120, the receiver circuitry 140, and the baseband circuitry 150 (including the decoder 160) may be as one or more processors, application specific integrated circuit (ASIC), field programmable gate array (FPGA), or any combination of them.

FIG. 2 is a schematic block diagram of a computing system, according to an embodiment. An illustrated example computing system 200 includes one or more processors 201 in direct or indirect communication, via a communication system 204 (e.g., bus), with memory 206, at least one network interface controller 203 with network interface port for connection to a network (not shown), and other components, e.g., input/output ("I/O") components 205. Generally, the processor(s) 201 will execute instructions (or computer programs) received from memory. The processor(s) 201 illustrated incorporate, or are connected to, cache memory 202. In some instances, instructions are read from memory 206 into cache memory 202 and executed by the processor(s) 201 from cache memory 202. The computing system 200 may not necessarily contain all of these components shown in FIG. 2 and may contain other components that are not shown in FIG. 2.

In more detail, the processor(s) 201 may be any logic circuitry that processes instructions, e.g., instructions fetched from the memory 206 or cache 202. In many implementations, the processor(s) 201 are microprocessor units or special purpose processors. The computing device 205 may be based on any processor, or set of processors, capable of operating as described herein. The processor(s) 201 may be single core or multi-core processor(s). The processor(s) 201 may be multiple distinct processors.

The memory 206 may be any device suitable for storing computer readable data. The memory 206 may be a device with fixed storage or a device for reading removable storage media. Examples include all forms of volatile memory (e.g., RAM), non-volatile memory, media and memory devices, semiconductor memory devices (e.g., EPROM, EEPROM, SDRAM, and flash memory devices), magnetic disks, magneto optical disks, and optical discs (e.g., CD ROM, DVD-ROM, or Blu-Ray^{®} discs). A computing system 200 may have any number of memory devices 206.

The cache memory 202 is generally a form of computer memory placed in close proximity to the processor(s) 201 for fast read times. In some implementations, the cache memory 202 is part of, or on the same chip as, the processor(s) 201. In some implementations, there are multiple levels of cache 202, e.g., L2 and L3 cache layers.

The network interface controller 203 manages data exchanges via the network interface (sometimes referred to as network interface ports). The network interface controller 203 handles the physical and data link layers of the OSI model for network communication. In some implementations, some of the network interface controller's tasks are handled by one or more of the processor(s) 201. In some implementations, the network interface controller 203 is part of a processor 201. In some implementations, the computing system 200 has multiple network interfaces controlled by a single device or controller 203. In some implementations, the computing system 200 has multiple network interface controllers 203. In some implementations, each network interface is a connection point for a physical network link (e.g., a cat-5 Ethernet link). In some implementations, the network interface controller 203 supports wireless network connections and an interface port is a wireless (e.g., radio) receiver or transmitter (e.g., for any of the IEEE 802.11 protocols, near field communication "NFC", Bluetooth, ANT, or any other wireless protocol). In some implementations, the network interface controller 203 implements one or more network protocols such as Ethernet. Generally, a computing device 205 exchanges data with other computing devices via physical or wireless links through a network interface. The network interface may link directly to another device or to another device via an intermediary device, e.g., a network device such as a hub, a bridge, a switch, or a router, connecting the computing device 200 to a data network such as the Internet.

The computing system 200 may include, or provide interfaces for, one or more input or output ("I/O") devices. Input devices include, without limitation, keyboards, microphones, touch screens, foot pedals, sensors, MIDI devices, and pointing devices such as a mouse or trackball. Output devices include, without limitation, video displays, speakers, refreshable Braille terminal, lights, MIDI devices, and 2-D or 3-D printers.

Other components may include an I/O interface, external serial device ports, and any additional co-processors. For example, a computing system 200 may include an interface (e.g., a universal serial bus (USB) interface) for connecting input devices, output devices, or additional memory devices (e.g., portable flash drive or external media drive). In some implementations, a computing device 200 includes an additional device such as a co-processor, e.g., a math co-processor can assist the processor 201 with high precision or complex calculations.

The components 209 may be configured to connect with external media, a display 207, an input device 208 or any other components in the computing system 200, or combinations thereof. The display 207 may be a liquid crystal display (LCD), an organic light emitting diode (OLED) display, a flat panel display, a solid-state display, a cathode ray tube (CRT) display, a projector, a printer or other now known or later developed display device for outputting determined information. The display 207 may act as an interface for the user to see the functioning of the processor(s) 201, or specifically as an interface with the software stored in the memory 206.

The input device 208 may be configured to allow a user to interact with any of the components of the computing system 200. The input device 208 may be a plurality pad, a keyboard, a cursor control device, such as a mouse, or a joystick. Also, the input device 208 may be a remote control, touchscreen display (which may be a combination of the display 207 and the input device 208), or any other device operative to interact with the computing system 200, such as any device operative to act as an interface between a user and the computing system 200.

Aspects of the operating environments and components described above will become apparent in the context of the systems and methods disclosed herein.

### B. SYSTEMS AND METHODS FOR COEXISTENCE SOLUTIONS USING WLAN MULTI-LINK OPERATIONS

The systems and methods of the present solution can improve latency and throughput performance of a multi-link device (MLD) that uses WLAN and non-WLAN (e.g., BT, LTE, ZigBee, Z-Wave) communications in various coexistence scenarios. For instance, the technical solutions can utilize multi-link (ML) along with any combination of features from a dynamic mechanism or a static mechanism. The technical solutions can utilize aspects of dynamic mechanism to steer WLAN communications (e.g., transmissions and reception) between WLAN links of a multi-link device (MLD) when non-WLAN (e.g., BT) is actively transmitting or receiving on one of the shared bands of ML. For instance, the technical solutions can utilize aspects of a static mechanism to steer WLAN traffic when any non-WLAN (e.g., BT) activity is detected (e.g., when a connection with a non-WLAN device is detected). The technical solutions can utilize any combination of both dynamic and static steering mechanisms described herein in any variation to achieve a desired performance.

The dynamic mechanism can track usage of the shared band in a MLD by collocated WLAN and non-WLAN (e.g., BT) communications. Embodiments of the dynamic mechanics can steer WLAN traffic to non-shared band/s (e.g., link/s) of the MLD when non-WLAN communications (e.g., BT) are actively receiving or transmitting while allowing the non-WLAN communications (e.g., BT) to initiate or complete its activity on the shared band of the MLD. Once the non-WLAN (e.g., BT) completes its activity (e.g., using the non-WLAN wireless communications protocols via shared communications resources), the mechanism can allow the WLAN to resume using the shared band for its transmission or reception until it determines that there is a non-WLAN (e.g., BT) activity, either existing or upcoming, which can impact either the non-WLAN (e.g., BT) or WLAN performance.

The dynamic mechanism can include granting non-WLAN (e.g., BT) shared-band of MLD when at least one other ML link in WLAN MLD is capable of transmitting WLAN communications. For instance, a mechanism to determine the capability of transmission can include monitoring WLAN medium occupancy on candidate links in MLD to determine if the WLAN communication can be steered to such candidate links. The dynamic mechanism can include blocking WLAN transmissions on the ML link that uses non-WLAN (e.g., BT) operation and steer the WLAN transmissions to non-shared ML link/s in MLD. This can be done, for example, as long as non-WLAN (e.g., BT) is actively receiving or transmitting, or is predicted to actively receive or transmit (e.g., determine an imminent or upcoming non-WLAN transmission within a threshold time interval).

The dynamic mechanism can include turning off WLAN PAs when non-WLAN (e.g., BT) is granted a shared-band while WLAN transmission is ongoing, while also using dynamic mechanism to release the remaining MPDUs that could not be transmitted in the current PPDU to other available link/s of the MLD for transmission via those available one or more links. For predictable or predicted non-WLAN (e.g., BT) traffic, resizing of the duration of WLAN transmissions to finish or complete such transmissions before the start of non-WLAN (e.g., BT) activity and transmit remaining MPDUs on the other available links of MLD, can be implemented. The dynamic mechanism can include indicating a non-WLAN (e.g., BT) antenna grant status as a power save (PS) indication of the ML link to an AP (e.g., Wi-Fi device) or a peer UE device to block or allow WLAN receiving (RX) on the shared-band.

The static mechanism can include utilizing steering of WLAN traffic to non-shared bands in MLD when there is at least one non-WLAN (e.g., BT) connection sharing the band detected. This mechanism can statically allocate non-shared link/s in MLD for WLAN transmissions and receptions, and the shared link for non-WLAN (e.g., BT) activity. For example, the static mechanism can block WLAN transmission on a link allocated to non-WLAN (e.g., BT) as long as there is at least one active non-WLAN (e.g., BT) connection. The WLAN may continue to operate on the other links of MLD. For example, if MLD is formed with three links, one on each band (e.g., 2.4 GHz, 5 GHz and 6 GHz), the static mechanism can disallow WLAN transmission and receptions on 2.4 GHz, but can continue to operate on 5 GHz, 6 GHz, or both 5 GHz and 6 GHz as long 2.4 GHz band has at least one collocated non-WLAN (e.g., BT) connection. For example, the static mechanism can include the non-AP (Non-Access Point) UE device or a STA, or a P2P (Peer to Peer) STA, blocking WLAN receive traffic by sending a power management (PM) indication, such as a PM=1 indication, to a peer device or devices when at least one non-WLAN (e.g., BT) connection is active.

For example, the static mechanism can allow sharing a link between WLAN and non-WLAN (e.g., BT) but adjust WLAN transmissions and reception parameters to minimize the impact on non-WLAN (e.g., BT) activity. Such parameters can include or be directed to, for example, reducing receiving (RX) and transmission (TX) block acknowledgements (BAs) window size. Such parameters can include or be directed to, for example, reducing aggregated MAC service data units (AMSDUs) size or disabling AMSDUs altogether. Such parameters can include or be directed to, for example, reducing a number of aggregates in AMPDU (e.g., the number of MPDUs within an AMPDU). Such parameters can include or be directed to, for example, disabling uplink (UL) orthogonal frequency-division multiple access (OFDMA) for data and/or control transmissions or traffic.

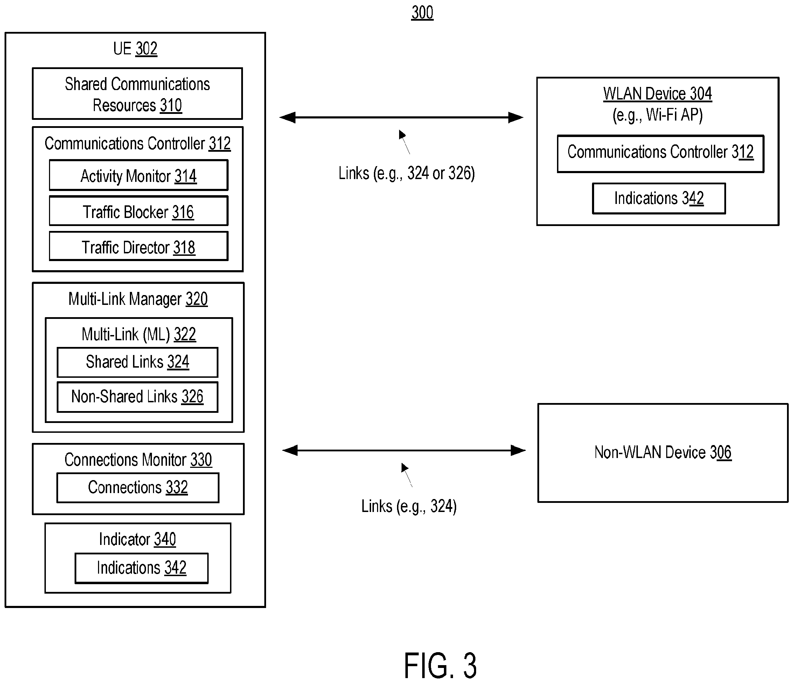

FIG. 3 illustrates an example of a system 300 for providing band steering of WLAN traffic in coexistence scenarios utilizing ML operation. System 300 can include one or more user equipment (UEs) 302 communicating via one or more wireless links (e.g., shared links 324 or non-shared links 326) with one or more access points (APs) also referred to as WLAN devices 304. The one or more UEs 302 can communicate via one or more wireless links (e.g., non-shared links 324) with one or more non-WLAN devices 306. UE 302 can include one or more of: shared communications resources 310, communications controllers 312, multi-link managers 320, connections monitors 330 and indicators 340. A communications controller 312 can include one or more of: activity monitors 314, traffic blockers 316 and traffic directors 318. A multi-link manager 320 can include one or more multi-links (MLs) 322 that can include shared links 324 and non-shared links 326. A connections monitor 330 can monitor or include information about one or more connections 332. A WLAN device 304 (e.g., a Wi-Fi AP) can include one or more communication controllers 312.

User equipment (UE) 302 can include any combination of hardware and software, such as a device, designed or configured for wireless communications using multiple wireless technologies. UE 302 can include, or be referred to as, a multi-link device or MLD 302. A multi-link device can be any wireless communication device configured or capable of establishing, maintaining and managing multiple simultaneous connections across different frequency bands or channels to optimize data transmission and reception. An MLD can be any device (e.g., a smartphone, a laptop, or a computing system) that can maintain multiple wireless communications with multiple devices using multiple wireless technologies or protocols (e.g., WLAN, BT, LTE and others) across same (e.g., shared) or different (e.g., non-shared) frequency bands.

UE 302 can include, for example, a communications system 105 or 108 or any functionalities of the communication systems 105 or 108 and can be implemented on, or using, a computing system of FIG. 2. UE 302 can include integrated circuitry, processors, memories, controllers, firmware or software, including computer code with instructions and data, for facilitating wireless communications across multi-link 322 or ML 322. UE 302 can include a mobile phone, a computer, a tablet, a laptop, an industrial or fabrication communication device or a system or any other multi-link device or a system. UE 302 can be a device comprising one or more hardware or software shared communication resources 310, including antennas, transceivers or other circuits. The UE device 302 can use the shared communications resources 310 for completing various wireless communications, including any WLAN communications (e.g., Wi-Fi) or non-WLAN communications (e.g., Bluetooth, LTE, ZigBee, Z-Wave or other wireless technologies using same frequency bands as the WLAN). UE 302 can include and utilize communications controller 312 to block, direct (e.g., steer) or otherwise manage WLAN or non-WLAN communications to improve the performance (e.g., reduce latency) of any one or both of, WLAN or non-WLAN communications. UE 302 can utilize communications controller 312, for example, to preclude, prevent or reduce the occurrence of in-device coexistence (IDC) issues, such as when WLAN and non-WLAN communications overlaps or collide (e.g., bleed into, leak into or attempt to utilize shared communications resources 310 at the same time).

The UE 302 can include one or more processors 201 coupled with memory (e.g., 202 or 206) that can store instructions, computer code and data to implement any features or functionalities of an MLD. For instance, one or more processors 201 of a UE 302 can implement a ML manager 320, a communications controller 312 (e.g., including activity monitor 314, traffic blocker 316 and traffic director 318), a connections monitor 330 and an indicator 340. For instance, the ML manager 320 of a UE 302 can establish a multi-link (ML) 320 comprising a plurality of links, such as shared links 324 and non-shared links 326, across different frequency bands (e.g., 2.4 GHz, 5 GHz or 6 GHz).

The UE 302 can include a communications controller 312 that can be configured (e.g., via instructions stored at memories 202 or 206) and implemented via one or more processors 201 to grant a non-WLAN device 306 to share access to a shared link 324 of the ML 322 with at least one other WLAN device 304. The non-WLAN device 306 can communicate using a different type of wireless protocol (e.g., protocols of any of BT, cellular network, ZigBee, Z-Wave, DECT, Thread or others), which differs from a protocol (e.g., IEEE 802.11) of the WLAN device 304 that can share a frequency band (e.g., 2.4 GHz) with the non-WLAN device 306.

The UE 302 can have the one or more processors 201 implement a traffic blocker 316 to block a WLAN communication of the WLAN device 304 on the shared link 324 of the ML 322 to be used by the non-WLAN device 306 for communicating. The UE 302 can have the one or more processors 201 implement a traffic director 318 to direct WLAN transmissions of the WLAN device to a non-shared link 326 of the ML 322 at least while the device performs the non-WLAN communication activity on the shared link 324. The communications controller 312 or its traffic director 318 can then allow the WLAN device 304 to resume WLAN transmission on the non-shared link 326 responsive to the non-WLAN device 306 completing the non-WLAN communication activity on the shared link 324. The non-WLAN communication activity can include any communications using wireless protocols of BT, cellular network, ZigBee, Z-Wave, Thread or DECT.

WLAN device 304, also referred to as an Access Point (AP) 304 or a Wi-Fi AP 304, can include any combination of hardware and software for providing or exchanging Wi-Fi communications with UE 302 via wireless links, including shared links 324 and non-shared links 326. WLAN device 304 can include, for example, a communications system 105 or 108 or any functionalities of the communication systems 105 or 108 and can be implemented on, or using, a computing system of FIG. 2. While for the purposes of example 300, WLAN device 304 can include a Wi-Fi AP device, it is understood that in various configurations (e.g., P2P or tethering applications) the WLAN device 304 can include another UE 302. WLAN device 304 can include or facilitate communication between UEs 302 via one or more networks (e.g., wired or wireless networks, cellular networks, the internet or similar). WLAN or AP 304 can include or operate as a transceiver, capable of sending and receiving data packets and include any features or functionalities for transmitting or receiving wireless communications, such as antennas, transceivers, RF front-end components (e.g., filters, amplifiers and switches), baseband processors or power management circuits. The WLAN device 304 can send and receive WLAN communications via one or more of its antennas and can coordinate the flow of the WLAN communications between itself and the UE 302 by managing access to the network, assigning IP addresses, frequency bands and channels for transmissions, based on indications 342 received from the UE 302.

Non-WLAN device 306 can include any combination of hardware and software for communicating non-WLAN communications with the UE 302. Non-WLAN device 306 can include the infrastructure and technologies used for non-WLAN wireless communications. Non-WLAN device 306 can include, for example, a communications system 105 or 108 or any functionalities of the communication systems 105 or 108 and can be implemented on, or using, a computing system of FIG. 2. For instance, non-WLAN device 306 can include components (e.g., circuitry, transceivers, antennas, signal processing circuits or other features) for implementing any one or more of: Bluetooth communications, ZigBee communications, cellular wireless communications (e.g., LTE), Z-Wave communications, Tread communications, DECT communications or any other wireless communications that can have overlapping frequencies or bands with WLAN communications. Non-WLAN device 306 can communicate with the UE 302 using shared links 324, such as for example 2.4 GHz link that can be also utilized by a WLAN communication.

Multi-Link (ML) manager 320 can include any combination of hardware and software within a UE 302 for establishing, coordinating and managing multi-link (ML), including multiple wireless links across various frequency bands or channels. ML manager 320 can include the functionality for allocating resources and maintaining operation of the shared links 324 and the non-shared links 326. ML manager 320 can facilitate coexistence between different wireless technologies, including WLAN (e.g., Wi-Fi) and non-WLAN communications (e.g., BT, cellular, ZigBee and others).

The ML manager 320 can include or utilize a connections monitor 330 to monitor real-time network conditions and activity. The ML manager 320 can include or utilize a communications controller 312 to statically or dynamically manage (e.g., block, steer or direct) traffic (e.g., WLAN communications traffic) to the most suitable communication links (e.g., non-shared links 326) when there is an ongoing or an impeding or approaching non-WLAN activity (e.g., non-WLAN communications or traffic) on the shared links 324. In doing so, the ML manager 320 can facilitate minimizing the interference and latency and maximizing throughput.

Multi-Link (ML) 322 generated and maintained by the multi-link manager 320 on a UE 302 can include any network configuration that facilitates or incorporates multiple wireless communication links for communication across various frequency bands or channels. ML 322 can include one or more shared links 324 or non-shared links 326. The shared links 324 can include links (e.g., frequency bands or one or more channels) that correspond to frequencies that can be utilized by multiple wireless technologies, such as WLAN (e.g., Wi-Fi) as well as at least one additional non-WLAN technology, such as Bluetooth, Cellular, ZigBee, Z-Wave, Thread, DECT, or any other wireless technologies at least partly overlapping with the frequencies (e.g., channels or bands) of the WLAN. The non-shared links 326 can include one or more links (e.g., frequency bands or one or more channels) that correspond to a frequency range that can be used or dedicated exclusively to a single wireless technology or a protocol (e.g., WLAN or Wi-Fi technology). The non-shared links 326, due to their frequency range being unavailable to other wireless technology or technologies, can be used to avoid communication interference and reducing the chance of signal bleeding due to inefficient filtering when the two wireless technologies are used simultaneously, or at least on the same frequency bands or channels.

Wireless links, such as the shared links 324 and non-shared links 326, can include any communications or connections established through radio frequency signals. Wireless links (e.g., 324 or 326) can include any signaling used for exchanging data wirelessly (e.g., without use of physical cables). Wireless links (e.g., 324 or 326) can include any wireless (e.g., radio frequency) interface or communication pathways established between any one or more of: UE 302 devices, WLAN devices 304 devices and non-WLAN devices 306. Shared links 324 can include wireless connections established via frequency bands or frequency channels that can be used by multiple wireless protocols or technologies, such as WLAN and one or more non-WLAN communications (e.g., BT, cellular network, ZigBee, Z-Wave or others). Non-shared links 326 can operate in frequency channels, bands or ranges that are exclusive to a single wireless communication protocol or a technology (e.g., WLAN).

Shared communications resources 310 can include any combination of hardware and software of a wireless communication device (e.g., a UE 302 or a WLAN device 304) that can be shared or utilized by multiple different wireless protocols or technologies. Shared communications resources 310 can include for example any hardware or software, or a combination of hardware and software, used to facilitate wireless communication using both WLAN (e.g., Wi-Fi) and non-WLAN communications, such as Bluetooth, Cellular Network (e.g., LTE), ZigBee, Z-Wave, Thread, DECT or any other. Shared communications resources 310 can include any portion of RF transmission or receiving signal chains used by WLAN and non-WLAN communications or protocols, including antenna and any circuitry for operating the antennas. Shared communications resources 310 can include, for example, radio frequency (RF) front-end components, baseband circuitry 150 or any filters, amplifiers and switches that can be used to manage or provide operation across different frequency bands or channels used for communicating the WLAN and non-WLAN communications. Shared communications resources 310 can include baseband processors for processing RF signals and power management systems for regulating power usage across transceivers.

Connections monitor 330 can include any combination of hardware and software for monitoring connections 332 of a wireless device (e.g., a UE 302 or WLAN device 304). Connections 332 can include any data transmission pathway established between two or more wireless communication devices, such as UE 302, WLAN device 304 and non-WLAN device 306. Connections 332 can include or establish a network pathway or a communication link established between UE device 302 and either WLAN device 304 or non-WLAN device 306 using radio frequency signals to transmit data wirelessly. Connections monitor 330 can be configured to detect one or more connections 332 of WLAN and non-WLAN communications. Connections monitor 330 can detect establishment, use, activity (e.g., presence or absence of activity), or any other aspect of any connection between the host wireless device (e.g., UE 302) and other devices. Connections monitor 330 can detect active connections with non-WLAN devices 306 by monitoring network traffic and keeping track of ongoing connections (e.g., established, inactive, active, terminated or in any other state).

Indicator 340 can include any combination of hardware and software for generating indications 342. Indications 342 can include any indication for regulating, controlling or adjusting wireless communications (e.g., transmissions or received communications). Indicator 340 can generate an indication 342 for an antenna shared for the WLAN communications with the WLAN device. The indication 342 can be indicative of whether the MLD (e.g., the UE 302) is receiving WLAN communications via the link. For example, the indication 342 can indicate to the WLAN device transmitting WLAN traffic to the MLD (e.g., UE 102) that the MLD is no longer receiving WLAN traffic on a given link (e.g., a shared frequency band or shared link). For instance, an indicator 340 can generate an indication 342 for a WLAN device 304 to signal or cause the WLAN device 304 to cease, stop or pause WLAN communications from the WLAN device at least while there is at least one active connection with the device. Indication 342 can include a phase modulation (PM) indications to an WLAN device 304. The PM indication can block the WLAN device 304 from transmitting any downlink (DL) data frames to the UE 302 that sends the PM indication to the WLAN device 304. The indication 342 can indicate for indicating a device (e.g., non-WLAN device 306 or WLAN device 304) an antenna grant status. The indication 342 can include a power save (PS) indication of a link (e.g., 324 or 326) to a WLAN device 304, a peer UE 302 device or a non-WLAN device 306. The indication 342 can cause the sender device (e.g., WLAN device 304, UE device 302) to block or allow WLAN receiving (RX) on the shared-band. Indication 342 can include a power management (PM) indication, such as a PM=1 indication, that can be sent to a WLAN device 304 or a UE 302 peer device or devices when at least one non-WLAN (e.g., BT) connection is active.

Communications controllers 312 can include any combination of hardware and software for controlling, managing, blocking, steering or routing network traffic. Communications controller 312 can include any combination of hardware and software for monitoring Wi-Fi communications and detecting and managing in-device coexistence (IDC) issues. Communications controller 312 can include functionalities to improve IDC performance, reduce time overlaps with respect to shared resources 310 and reduce any communication collisions or instances of dropped or lost network traffic. Communications controller 312 can control flow of network packets transmitted or received via WLAN or non-WLAN communications with respect to coexistence scenarios using ML 322. For instance, communications controller 312 can manage blocking of network traffic from certain shared links 324 and diverting network traffic intended for such shared links 324 towards non-shared links 326. For instance, communications controller 312 can monitor network activity (e.g., using activity monitor 314 or connections monitor 330) to determine how to manage (e.g., block, steer, direct or divert) network traffic responsive to detected coexistence issues or events (e.g., overlapping communications by WLAN and non-WLAN communications).

Communications controller 312 can include an activity monitor 314 for monitoring activity of a connection between the UE 302 and another device (e.g., WLAN device 304 or non-WLAN device 306). Activity monitor 314 can monitor the level of activity on a link (e.g., 324 or 326). For instance, activity monitor 314 can measure a time duration since a last activity on a link to determine if the link is an active or inactive link. Activity monitor 314 can provide activity information on links 324 or 326 to the communications controller 312, such as to block network traffic (e.g., via a traffic blocker 316) or direct or steer traffic (e.g., via a traffic director 318).

Traffic blocker 316 can include any combination of hardware and software for blocking network traffic. Traffic blocker 316 can block network traffic from particular frequency bands or channels. Traffic blocker 316 can, for example, block WLAN communications from a shared link 324 in response to determining, by a communications controller 312, that a non-WLAN communication (e.g., BT, cellular or ZigBee) is using or is about to start using a shared link 324.

Traffic director 318 can include any combination of hardware and software for directing or steering network traffic from one frequency band or channel to another. For example, traffic director 318 can be configured to direct or steer MPDUs of an AMPDU of a WLAN communication whose first portion (e.g., first one or more MPDUs) were communicated via a shared link 324 onto a non-shared link 326 to complete the communication of the remaining MPDUs on a non-shared link 326.

In response to determining to steer or redirect WLAN traffic to a non-shared link 326, a communications controller 312 turn off a power amplifier used for processing of the WLAN communication on the shared link 324 of the ML 322. For example, in response to blocking of the WLAN network traffic (e.g., communications, whether transmissions or received communications) by a traffic blocker 316, the communications controller 312 can turn off, reduce power of, or power down any power amplifiers or other circuitry, processors or hardware used for WLAN communications on the shared link 324.

Communications controller 312 can determine that an unused link (e.g., an unused non-shared link 326) of the ML 322 is configured or capable of communicating the WLAN communications and can grant the non-WLAN device 306 to share access to the shared link 324, in response to the determination that the unused link is configured or capable for WLAN communications. The communications controller 312 can utilize the activity monitor 314 to determine the shared link 324 is used for the activity (e.g., non-WLAN communications via the shared link 324) of the non-WLAN device 306. The communications controller 312 can block the WLAN communication of the WLAN device 304 to the shared link 324 in response to the determination that there is a non-WLAN activity on the same link.

Communications controller 312 can identify a time duration during which the non-WLAN device 306 is to perform the non-WLAN activity on the shared link 324. The communications controller 312 can determine to direct the WLAN transmissions to the non-shared link 326 for at least the time duration in response to such identification of the time duration. The communications controller 312 can identify one or more medium access control protocol data units (MPDUs) of a physical protocol data unit (PPDU) of the WLAN communication not yet communicated with the WLAN device 304 via the shared link 324 prior to the blocking of the WLAN communications by the traffic blocker 316. The communications controller 312 can direct the identified one or more MPDUs to the non-shared link 326 for communication with the WLAN device 304 via the non-shared link 326.

Communications controller 312 can determine a time duration until a start of the activity on the shared link 324 by the non-WLAN device 306 and adjust a size of the WLAN communication in order to complete communicating the WLAN communication on the shared link 324 prior to the start of the activity on the shared link 324 by the non-WLAN device 306. The communications controller 312 can utilize an indicator 340 to generate an indication 342 for a shared communications resource 310 (e.g., an antenna shared for the WLAN communications with the WLAN device and the activity by the non-WLAN device 306). The indication 342 can be indicative of whether the MLD (e.g., UE 302) is receiving WLAN communications via the shared link 324. For instance, the indication 342 can indicate that the UE 302 is either not receiving WLAN traffic at the given shared link 324 (e.g., 2.4 GHz) or that it is not going to be receiving the WLAN traffic at the given band starting at a particular time.

Communications controller 312 can allocate, from a multi-link (ML) 312 comprising a plurality of links across different frequency bands, a non-shared link 326 of the ML 322 for a WLAN device 304 and a shared link 324 of the ML 322 for the WLAN device 304 and a non-WLAN device 306. The non-WLAN device 306 can communicate with the UE 302 using a different type of wireless protocol (e.g., protocols of BT, cellular, ZigBee or others) than a protocol (e.g., IEEE 802.11) of the WLAN device 304 that shares a frequency band (e.g., 2.4 GHz band) with the non-WLAN device 306. For example, the shared link 324 can include or correspond to the frequency band of 2.4 GHz and the non-shared link 326 can include or corresponds to at least one of a frequency band of 5 GHz or a frequency band of 6 GHz.

The communications controller 312 can utilize the traffic blocker 316 to block WLAN communications transmitted to the WLAN device 304 on the shared link 324 at least while there is at least one active connection with the non-WLAN device 306. For instance, a connections monitor 330 or the activity monitor 314 can detect the connection and its activity and provide a feedback to the traffic blocker 316 to block the WLAN communications. The communications controller 312 can utilize the traffic blocker 316 to block, via an indication 342 sent to the WLAN device, WLAN communications from the WLAN device 304 at least while there is at least one active connection with the non-WLAN device 306. For instance, a connections monitor 330 can detect an active connection 332 with the non-WLAN device 306 to communicate using the different type of wireless protocol than the protocol of the WLAN (e.g., 802.11) and the communications controller 312 can allocate the shared link 324 to the non-WLAN device 306 and the non-shared link 326 to the WLAN device 304, responsive to this detection.

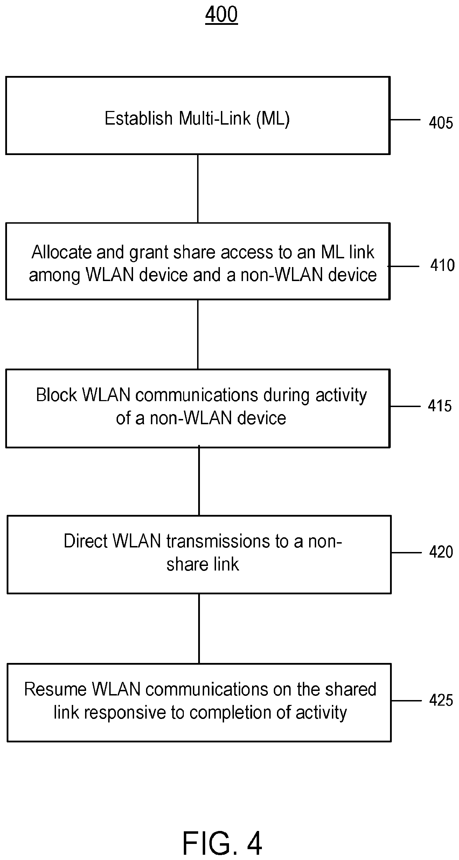

FIG. 4 illustrates an example method 400 for band steering of WLAN traffic in coexistence scenarios utilizing multi-link operation. The method 400 can be implemented using, for example, systems features or techniques discussed in connections with FIGs. 100-300, including for example system 300 implemented in, or using, a computer system 200 of FIG. 2. The method 400 can include acts or operations 405-425. At 405, the method can establish a multi-link (ML). At 410, the method can allocate and grant share access to an ML link among WLAN device and a non-WLAN device. At 415, the method can block WLAN communications during activity of a non-WLAN device. At 420, the method can direct WLAN transmissions to a non-share link. At 425, the method can resume WLAN communications on the shared link responsive to completion of activity.

At 405, the method can establish a multi-link (ML). The method can include the multi-link manager of an MLD (e.g., UE) device establishing a multi-link (ML). The ML can include a plurality of links across different frequency bands. The plurality of links can include one or more shared links that can be allocated to, or shared by, both WLAN devices for WLAN protocol communications (e.g., via 802.11 protocol) and non-WLAN devices that can communicate using non-WLAN protocol communications, such as Bluetooth, cellular network, Zigbee, Z-wave, DECT, Thread, satellite communications and other wireless communications whose frequencies (e.g., frequency bands or channels) at least partly overlap with those of the WLAN.

The WLAN device and the non-WLAN device can each communicate with the MLD (e.g., UE device) using their own wireless communication protocols. The WLAN device can communicate with the MLD using 802.11 (e.g., WLAN) communications, while the non-WLAN device can communicate with the MLD using protocols of the Bluetooth, cellular network, Zigbee, Z-Wave or other non-WLAN protocols. The WLAN device can communicate with the MLD using shared and non-shared links. The non-WLAN device can communicate with the MLD using the shared links. The shared links and the non-shared links can each include frequency bands or channels including or corresponding to the 2.4 GHz band, 5 GHz band or 6 GHz band. For example, the shared links can correspond to frequency bands of 2.4 or 5 GHz. For example, non-shared links can correspond to 5 GHz and 6 GHz bands.

The links can be used for activity, such as wireless communication activity (e.g., data communications or information exchange). The activity on the links used by the non-WLAN device the different type of wireless protocol corresponding to at least one of: Bluetooth (BT) communications, cellular network communications, ZigBee communications, Z-Wave communications, Thread communications or digital enhanced cordless telecommunications (DECT) communications.

At 410, the method can allocate and grant share access to an ML link among WLAN device and a non-WLAN device. The method can include the communication controller granting a non-WLAN device to share access to a link (e.g., a shared link) of the ML with at least one WLAN device. The communication control can give the non-WLAN device access or permission to use a shared link that can be used by a WLAN device. The non-WLAN device can communicate with the MLD (e.g., UE device) using a different type of wireless protocol (e.g., BT) than a protocol (e.g., 802.11) of the WLAN device that shares a frequency band (e.g., 2.4 GHz or 5 GHz) with the non-WLAN device.

The method can include the communications controller determining that an unused link (e.g., non-shared link) of the ML is capable of communicating the WLAN communication. This determination can be done, using for example, activity monitor of a connections monitor, and analyzing connection related data or transmissions. In response to this determination, the communications controller can grant the non-WLAN device to share access to the shared link.

The method can include the communications controller allocating, from a multi-link (ML) comprising a plurality of links across different frequency bands, a non-shared link of the ML for a WLAN device and a shared link of the ML for use by the WLAN device and by a non-WLAN device communicating using a different type of wireless protocol than a protocol of the WLAN device sharing a frequency band with the non-WLAN device. The method can include the connections monitor or the activity monitor detecting an active connection with the non-WLAN device to communicate using the different type of wireless protocol than the WLAN protocol (e.g., 802.11). The communications controller can allocate the shared link to the non-WLAN device and the non-shared link to the WLAN device, responsive to this detection (e.g., of active connection with the non-WLAN device).

At 415, the method can block WLAN communications during activity of a non-WLAN device. The method can include a traffic blocker of the MLD blocking a WLAN communication of the WLAN device on the shared link of the ML to be used by the non-WLAN device for communicating using non-WLAN communication protocol (e.g., BT, cellular, ZigBee or others). The communications controller can turn off a power amplifier for processing the WLAN communication on the shared link of the ML in response to the blocking of the WLAN communication. The blocking of the WLAN communication can include, for example, sending a notification to the WLAN device to stop sending transmissions on the shared link and use a non-shared link for future transmissions.

The method can include the communications controller determining that the shared link is used for the activity of the non-WLAN device and blocking, by the traffic blocker, the WLAN communication of the WLAN device in response to this determination. The method can include the communications controller determining a time duration until a start of the activity by the non-WLAN device on the shared link and adjust a size of the WLAN communication to complete communicating the WLAN communication on the shared link prior to the start of the activity, by the non-WLAN device, on the shared link.

The method can include the indicator generating an indication for an antenna (e.g., or any other shared communication resource) shared for the WLAN communications with the WLAN device and the activity by the non-WLAN device. The indication can be indicative of whether the MLD is receiving WLAN communications via the link. For instance, the indication can state that WLAN communications will no longer be received on the given shared-link. The indication can be prepared for the antenna and transmitted, via the antenna, to the WLAN device. The indication can be prepared for the antenna system to configure the antenna system to route, steer or direct the WLAN communications on a different frequency band or a link (e.g., non-shared link).

The method can include the traffic blocker blocking the WLAN communications transmitted to the WLAN device on the shared link at least while there is at least one active connection with the non-WLAN device. The active connection can be a connection using a shared link. The traffic blocker can block, via an indication sent to the WLAN device, WLAN communications from the WLAN device at least while there is at least one active connection with the device.

At 420, the method can direct WLAN transmissions to a non-share link. The method can include the traffic director of the MLD (e.g., UE) directing WLAN transmissions of the WLAN device to a non-shared link of the ML at least while the device performs activity on the link. The method can include the communications controller or an activity monitor identifying a time duration during which the device is to perform the activity on the link. The communications controller can determine to direct (e.g., via traffic director) the WLAN transmissions to the non-shared link for at least the time duration. For instance, the traffic director can issue one or more commands or instructions to configure the circuitry or signal processing of the MLD to route the WLAN traffic to the non-shared link.

The method can include the communications controller identifying one or more medium access control protocol data units (MPDUs) of a physical protocol data unit (PPDU) of the WLAN communication not yet communicated with the WLAN device via the link prior to the blocking. The communications controller can utilize the traffic director to direct the identified one or more MPDUs to the non-shared link for communication with the WLAN device via the non-shared link.

At 425, the method can resume WLAN communications on the shared link responsive to completion of activity. For instance, the method can include the communications controller allowing the WLAN device to resume WLAN transmission on the link responsive to the device completing activity on the shared link. For example, the activity monitor can determine that the activity on the shared link has decreased to a level below an activity threshold and can determine that the activity is completed. The communications controller can determine, in response to the determination that the activity is completed, to reroute the WLAN communications back to the original shared link.

For instance, the communications monitor can determine that the WLAN device prefers to utilize a shared link over a non-shared link. In response to the activity at the shared link by the non-WLAN device decreasing below a threshold (e.g., activity being completed), the communications controller can determine to issue one or more instructions to reconfigure the traffic control at the MLD to have the WLAN communications routed or communicated via shared link. For instance, the communications controller can utilize the indicator to send an indication to the WLAN device to continue transmitting WLAN communications via the shared controller (e.g., switch back from the non-shared link to the shared link). For example, the communications controller can use an indicator to send an indication or instructions or configurations to the MLD circuitry (e.g., shared communications resources) to reconfigure the MLD (e.g., UE) to use the shared link for the WLAN communications once again.

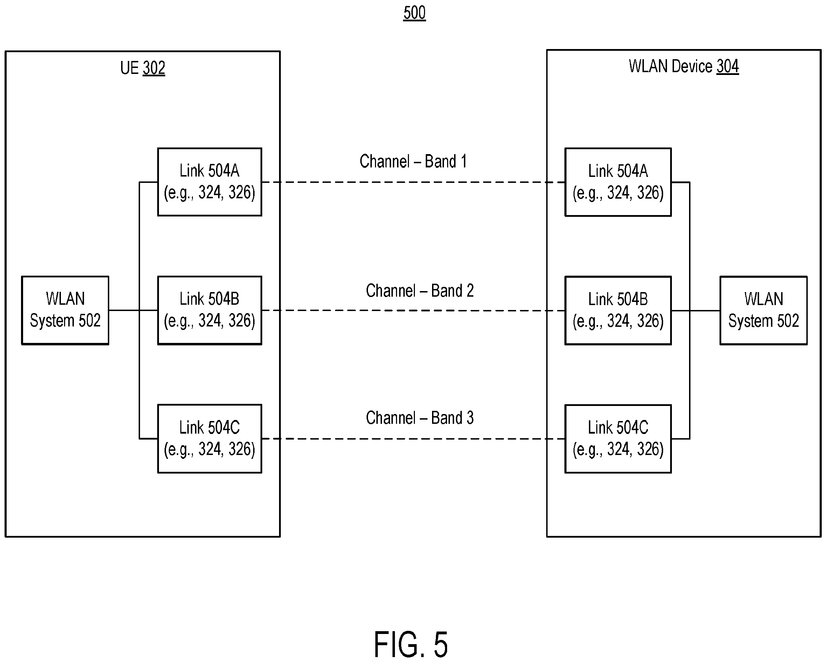

FIG. 5 illustrates an example of a configuration 500 in which UE 302 (e.g., MLD) and WLAN device 304 can exchange WLAN communications via shared and non-shared links. In configuration 500, an MLD and a WLAN AP can utilize their own WLAN modules or systems 502 to exchange communications via links 504 (e.g., channels or bands) that may or may not be shared with other technologies or communication protocols. The UE 302 and WLAN device 304 can each include its own WLAN module or a system 502. The WLAN system 502 can include any combination of hardware and software for managing and implementing WLAN communications. WLAN system 502 can include circuitry for implementing (e.g., sending or receiving) WLAN network traffic. WLAN system 502 can include, for example, any combination of: shared communication resources 310, communications controller 312, ML manager 320, connections monitor 330 or indicator 340. WLAN system 502 can include WLAN configured transceivers, signal processing circuitry or any other features or functionalities for WLAN communication.

In a configuration 500, the WLAN systems 502 of the UE 302 (e.g., MLD) and the WLAN device 304 (e.g., a Wi-Fi AP) can communicate via multiple links 504, including link 504A, link 504B and link 504C. Each link 504A-C can be or include a shared link 324 or a non-shared link 326 that can be used for WLAN communications. Some of the shared links of the 504A-C can be used for non-WLAN communications (e.g., via non-shared channels or bands). For example, link 504A can be a non-shared link 326 that can be used for WLAN communications only, while link 504B can be a shared link 324 that can be used for both BT and WLAN communications.

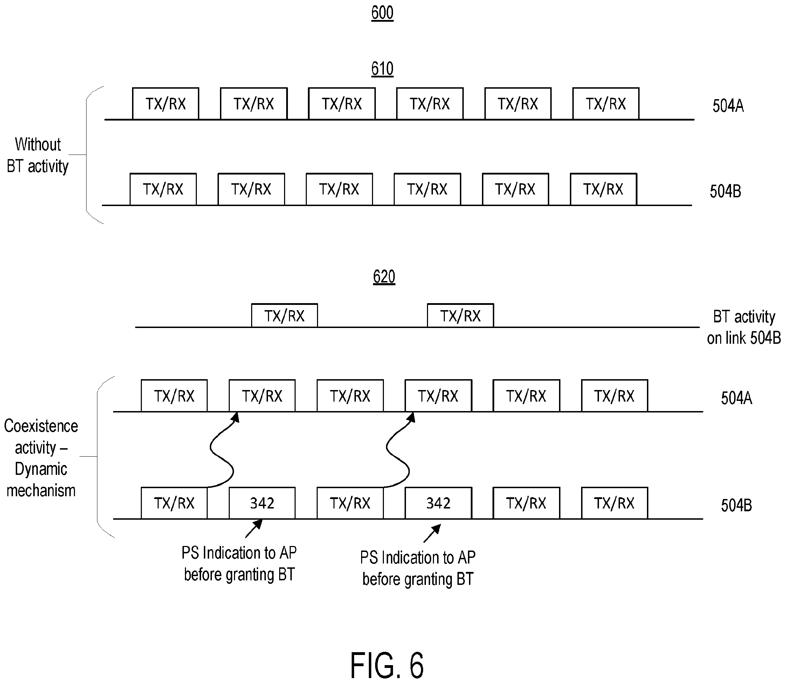

FIG. 6 illustrates an example 600 of a dynamic mechanism configuration in which a WLAN traffic is directed or steered towards non-shared links in response to detected non-WLAN (e.g., BT) activity on a shared link. Example 600 illustrates a view 610 in which no coexistence event is occurring (e.g., without BT activity) and WLAN communications are being transmitted on a links 504A and 504B. Example 600 also illustrates a view 620 showing a coexistence event in which a BT activity occurs on a 504B (e.g., a shared link 324 which can be used by both WLAN and BT).

The example dynamic mechanism 600 can include a configuration in which communications controller 312 tracks usage of the shared band in MLD by collocated WLAN and BT. The communications controller 312 can steer (e.g., via traffic director 318) WLAN traffic to non-shared band(s) or link(s) 326 (e.g., link 504A) of the MLD, when BT communication being received or transmitted, while allowing BT to initiate or complete its activity on the shared band (e.g., 504B) of MLD. Once BT communication completes, (e.g., BT activity is completed) the mechanism can allow the WLAN to resume using the shared band (e.g., 504B) for its transmission or reception. This use of the shared link 324 (e.g., 504B band for WLAN communications) can continue until the communications controller 312 determines or detects another BT activity, either existing or upcoming, which can impact BT or WLAN performance and in response to which the communications controller 312 can once again steer WLAN traffic to the non-shared link 504A.

For example, the dynamic mechanism 600 can grant BT communication a shared-band (e.g., 504B) of MLD when at least one other ML link (e.g., shared link 324 or non-shared link 326) is capable for supporting WLAN communications for the MLD. For instance, one example mechanism to determine the capability of transmission can be for the communications monitor 312 to monitor WLAN medium occupancy on candidate links in MLD. The dynamic mechanism 600 can include the communications controller 312 blocking WLAN transmissions on the ML link that requests, uses or includes BT operation or activity (e.g., 504B) and steer WLAN transmissions to a non-shared ML link 326 in MLD (e.g., 504A) for as long as BT is actively receiving or transmitting, or for a time duration for which the communications controller predicts (e.g., based on the data or type of activity of the BT transmissions) that the BT activity is going to last.

The communications controller 312 can turn off one or more WLAN PAs (e.g., to conserve energy) when BT is granted shared-band (e.g., to 504B) while WLAN transmission is ongoing. The communications controller 312 can release remaining MPDUs that were not yet transmitted in the current PPDU to other available links (e.g., 504A) of MLD for transmission. For predicted BT traffic, the communications controller 312 can resize the duration of WLAN transmissions (e.g., size the AMPDUs) to make sure that each WLAN transmission on the shared link 324 finishes its transmission before the start of BT activity on the same shared link.

The communications controller can indicate the BT antenna grant status as a PS indication of the ML link to the WLAN device 304 to block or allow WLAN RX on the shared-band (e.g., 504B). For instance, upon detecting a present, an incoming or an upcoming BT activity (e.g., transmission or receiving of BT data), the communications controller 312 can utilize the indicator 340 to send a PS indication 342 to the WLAN device 304 to notify the WLAN device 304 that MLD will not be receiving WLAN traffic on 504B link (e.g., during the BT activity). The PS indication can cause the WLAN device 304 to not transmit WLAN traffic on the 504B link during the stated time duration (e.g., time duration of the BT activity), or until another indication 342 is received to indicate to continue WLAN transmissions on the 504B.

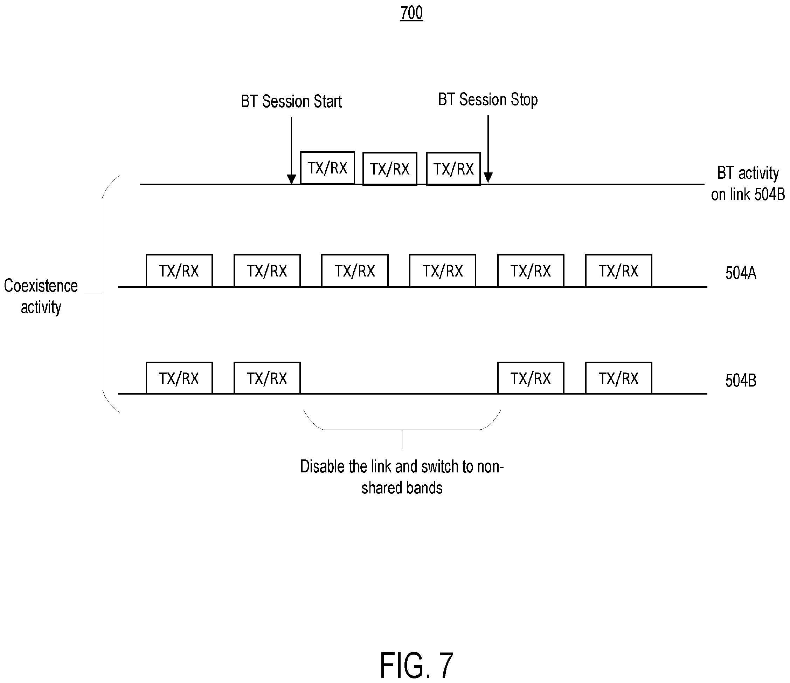

FIG. 7 illustrates an example 700 of a static mechanism configuration in which WLAN communications are disabled on a shared link (e.g., 504B) during the time period in which the shared link is utilized by non-WLAN (e.g., BT) activity. The static mechanism of example 700 can include a shared link 324 (e.g., 504B) that can be used by non-WLAN (e.g., BT) and by WLAN communications and a non-shared link 326 (e.g., 504A). A non-WLAN (e.g., BT) communication session can start at for a shared link 324 (e.g., 504B). In response to the start of the session, the communications controller 312 can disable the shared link used by the non-WLAN (e.g., 54B) for further WLAN communications to steer the WLAN communications to the non-shared link 326 (e.g., 504A). During the time period for which the WLAN communications are disabled on the 504B (e.g., and steered to 504A), the BT session can transmit communications on the 504B. This can allow the BT communications and the WLAN communications to be separated from each other further in the frequency range, resulting in reduced cross-talk and reduced interference between the WLAN and non-WLAN communications, allowing for the WLAN and BT communications to be implemented at increased throughput and with increased reliability.

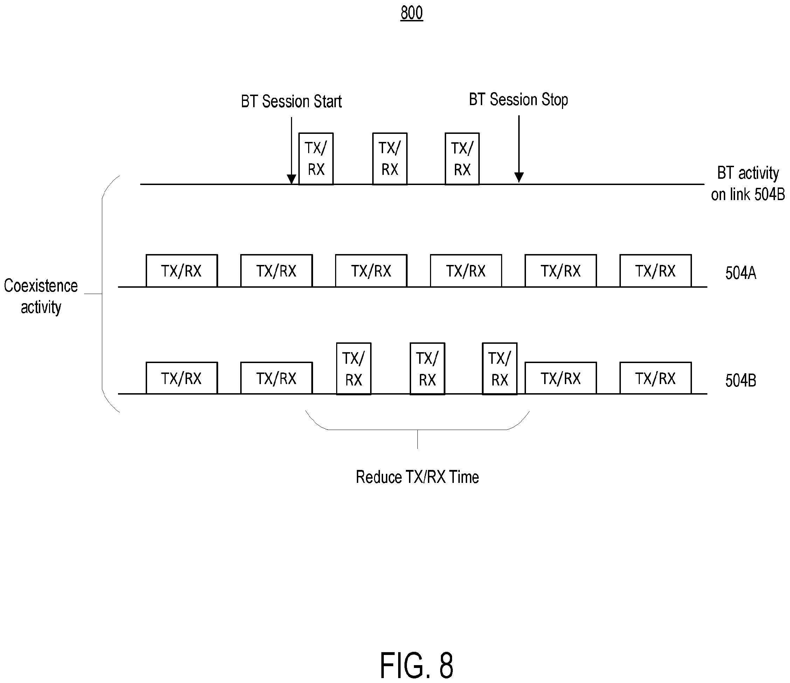

FIG. 8 illustrates an example 800 of a static mechanism configuration in which WLAN communications can be timed and sized on the shared link to occur while non-WLAN activity is not occurring on the same shared link (e.g., the WLAN transmissions are timed and sized to occur in between non-WLAN activities). In example 800, the static mechanism can time WLAN traffic so that they can begin after a prior non-WLAN transmission is completed. The static mechanism can size the WLAN transmission such that it can be completed before the next non-WLAN transmission begins on the same shared link (e.g., 504). The static mechanism of example 800 can include both WLAN and non-WLAN traffic implemented on the shared link 324 (e.g., 504B), such that AMPDUs/PPDUs can be sized so that they can be completed prior to the start of the next upcoming non-WLAN transmission. Then, upon completion of the next non-WLAN transmission, the communications controller 312 can size and time the next AMPDU/PPDU to be completed (e.g., transmitted) before a following non-WLAN (e.g., BT) transmission begins. In doing so, the static mechanism 800 can manage the timing of the WLAN to be transmitted during the time periods in between the non-WLAN traffic (e.g., when no BT activity is on the 504B). This can result in reduced cross-talk and interference between the WLAN and non-WLAN communications, allowing for the WLAN and BT communications to be implemented at increased reliability.

For example, a static mechanism can utilize the steering of WLAN traffic to non-shared bands in an MLD when at least one BT connection sharing the band is detected. This mechanism can involve statically allocating non-shared links in the MLD for WLAN transmissions and receptions while designating the shared link for BT activity. It can block WLAN transmission on a link allocated to BT for any time duration predicted or based on ongoing non-WLAN monitoring. For instance, the WLAN transmissions can be blocked on a shared link 324 (e.g., 504B) as long as there is at least one active BT connection, allowing WLAN to continue operating on the other links (e.g., 504A) of the MLD. For example, if the MLD comprises three links, one on each band (2.4 GHz, 5 GHz, and 6 GHz), the static mechanism can disallow WLAN transmission and reception on the 2.4 GHz band (e.g., 504B) while continuing operations on the 5 GHz (e.g., 504A) and 6 GHz bands (e.g., 504C), or both (e.g., 504A and 504C), as long as there is at least one collocated BT connection on the 2.4 GHz band. Additionally, non-AP STA or P2P STA can block WLAN reception by sending a PM=1 indication to peer devices when at least one BT connection is active. In one example, a static mechanism can allow for sharing a link between WLAN and BT, but adjust WLAN transmission and reception parameters to minimize the impact on BT activity. These adjustments can include reducing RX and TX BA window size (e.g., sizing AMPDUs). For instance, the communications controller 312 can reduce the AMSDU size or disable it, reducing the number of aggregates in AMPDU, and disabling UL OFDMA for data and/or control.

When an element is referred to herein as being "connected" or "coupled" to another element, it is to be understood that the elements can be directly connected or coupled the other element or have intervening elements present between the connected or coupled elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first substrate and a second substrate) temporally or according to a sequence, although in some cases, these entities can include such a relationship. Nor do these terms limit the number of possible entities (e.g., delay circuit, filter, peak detector) that can operate within a system or environment. It should be understood that the systems described above can provide multiple ones of any or each of those components and these components can be provided on either a standalone structure or device or, in some embodiments, on multiple structures or devices in a distributed system.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above-described embodiments, methods, and examples, but by all embodiments and methods within the scope and spirit of the disclosure.

## Claims

1. A system comprising:
a multi-link device, MLD, (302) comprising one or more processors (201) coupled with memory (206) to:
establish a multi-link, ML, comprising a plurality of links across different frequency bands;
grant a device to share access to a link of the ML with at least one Wireless Local Area Network, WLAN, device (304), the device communicating using a different type of wireless protocol than a protocol of the WLAN device (304) that shares a frequency band with the device;
block a WLAN communication of the WLAN device (304) on the link of the ML to be used by device for communicating;
direct WLAN transmissions of the WLAN device (304) to a non-shared link of the ML at least while the device performs activity on the link; and
allow the WLAN device (304) to resume WLAN transmission on the link responsive to the device completing activity on the link.

2. The system of claim 1, wherein the activity on the link utilizes the different type of wireless protocol corresponding to at least one of: Bluetooth, BT, communications, cellular network communications, ZigBee communications, Z-Wave communications, Thread communications or digital enhanced cordless telecommunications, DECT, communications.

3. The system of claim 1 or 2, comprising the one or more processors (201) to:
turn off a power amplifier for processing the WLAN communication on the link of the ML in response to the blocking.

4. The system of any of claims 1 to 3, comprising the one or more processors (201) to:
determine that an unused link of the ML is capable of communicating the WLAN communication; and
grant the device to share access to the link, in response to the determination.

5. The system of any of claims 1 to 4, comprising the one or more processors (201) to:
determine the link is used for the activity of the device; and
block the WLAN communication of the WLAN device (304) in response to the determination.

6. The system of any of claims 1 to 5, comprising the one or more processors (201) to:
identify a time duration during which the device is to perform the activity on the link; and
determine to direct the WLAN transmissions to the non-shared link for at least the time duration.

7. The system of any of claims 1 to 6, comprising the one or more processors (201) to:
identify one or more medium access control protocol data units, MPDUs, of a physical protocol data unit, PPDU, of the WLAN communication not yet communicated with the WLAN device (304) via the link prior to the blocking; and
direct the identified one or more MPDUs to the non-shared link for communication with the WLAN device (304) via the non-shared link.

8. The system of any of claims 1 to 7, comprising the one or more processors (201) to:
determine a time duration until a start of the activity on the link by the device;
adjust a size of the WLAN communication to complete communicating the WLAN communication on the link prior to the start of the activity on the link by the device.

9. The system of any of claims 1 to 8, comprising the one or more processors (201) to:
generate an indication for an antenna shared for the WLAN communications with the WLAN device (304) and the activity by the device, the indication indicative to the WLAN device (304) whether the MLD (302) is receiving WLAN communications via the link.

10. A multi-link device, MLD), (302) comprising:
one or more processors (201) coupled with memory (206) to:
allocate, from a multi-link, ML, comprising a plurality of links across different frequency bands, a non-shared link of the ML for a Wireless Local Area Network, WLAN, device (304) and a shared link of the ML for the WLAN device (304) and a device communicating using a different type of wireless protocol than a protocol of the WLAN device (304) sharing a frequency band with the device;
block WLAN communications transmitted to the WLAN device (304) on the shared link at least while there is at least one active connection with the device; and
block, via an indication sent to the WLAN device (304), WLAN communications from the WLAN device (304) at least while there is at least one active connection with the device.

11. The MLD (302) of claim 10, comprising the one or more processors (201) to:
detect an active connection with the device to communicate using the different type of wireless protocol; and
allocate the shared link to the device and the non-shared link to the WLAN device (304), responsive to the detection.

12. The MLD (302) of claim 11, wherein the different type of wireless protocol includes at least one of: Bluetooth communications, cellular network communications, ZigBee communications, Z-Wave communications, Thread communications or digital enhanced cordless telecommunications, DECT, communications.

13. The MDL of claim 10 or 11, wherein the shared link corresponds to the frequency band of 2.4 GHz and the non-shared link corresponds to at least one of a frequency band of 5 GHz or a frequency band of 6 GHz.

14. A method comprising:
establishing, by a multi-link device, MLD, (302) a multi-link, ML, comprising a plurality of links across different frequency bands;
granting, by the MLD (302), a device to share access to a link of the ML with at least one Wireless Local Area Network, WLAN, device (304), the device communicating using a different type of wireless protocol than a protocol of the WLAN device (304) that shares a frequency band with the device;
blocking, by the MLD (302), a WLAN communication of the WLAN device (304) on the link of the ML to be used by device for communicating;
directing, by the MLD (302), WLAN transmissions of the WLAN device (304) to a non-shared link of the ML at least while the device performs activity on the link; and
allowing, by the MLD (302), the WLAN device (304) to resume WLAN transmission on the link responsive to the device completing activity on the link.

15. The method of claim 14, comprising at least one of the following features:
i) wherein the activity on the link utilizes the different type of wireless protocol corresponding to at least one of: Bluetooth, BT, communications, cellular network communications, ZigBee communications, Z-Wave communications, Thread communications or digital enhanced cordless telecommunications, DECT, communications;
ii) further comprising:
turning off, by the MLD (302), a power amplifier for processing the WLAN communication on the link of the ML in response to the blocking;
iii) further comprising:
determining, by the MLD (302), that an unused link of the ML is capable of communicating the WLAN communication; and
granting, by the MLD (302), the device to share access to the link, in response to the determining;
iv) further comprising:
determining, by the MLD (302), the link is used for the activity of the device; and
blocking, by the MLD (302), the WLAN communication of the WLAN device (304) in response to the determining;
v) further comprising:
identifying, by the MLD (302), a time duration during which the device is to perform the activity on the link; and
determining, by the MLD (302), to direct the WLAN transmissions to the non-shared link for at least the time duration;
vi) further comprising:
identifying, by the MLD (302), one or more medium access control protocol data units, MPDUs, of a physical protocol data unit, PPDU, of the WLAN communication not yet communicated with the WLAN device (304) via the link prior to the blocking; and
directing, by the MLD (302), the identified one or more MPDUs to the non-shared link for communication with the WLAN device (304) via the non-shared link.
